# EUROPÄISCHE PATENTANMELDUNG

(11) **EP 0 579 258 A1**
(43) Veröffentlichungstag der Anmeldung: **19.01.1994**
(21) Anmeldenummer: 93111539.8
(22) Anmeldetag: 19.07.1993
(51) Int. Cl.: F02G 5/04, F24D 11/00

(54) **Wärme- und Stromerzeugungsanlage**

(30) Priorität: 17.07.1992 DE 4223664
(71) Anmelder: Bethke, Olaf Erich, D-86845 Grosshaitingen-Hardt (DE)
(72) Erfinder: Bethke, Olaf Erich, D-86845 Grosshaitingen-Hardt (DE)
(74) Vertreter: Meyer-Roxlau, Reiner Ferdinand, Dipl.-Ing.

(57) **Zusammenfassung**

Zur kostengünstigen Erzeugung von Wärme und Strom dient eine Anlage, bestehend aus einer Thermo/Elektro-Einheit, insbesondere in der Form einer Brennkraftmaschine und einem von dieser angetriebenen Elektrogenerator, aus einem Wärmetauscher zwischen der Thermo/Elektro-Einheit einerseits und einer Brauchwasserleitung andererseits, ggf. zwischen der Abgasleitung der Brennkraftmaschine und/oder deren Kühlwasserumlaufsystem einerseits und der Brauchwasserleitung andererseits, aus einem Wärmespeicher in der Brauchwasserleitung und aus einer Elektroheizung zum Aufheizen des Wärmespeichers. Dabei sind der Wärmetauscher und der Wärmespeicher als eine Einheit ausgebildet, und ist die Elektroheizung innerhalb der Wärmetauscher/Wärmespeicher-Einheit angeordnet. Für ein möglichst großes Wärmespeichervermögen, und insbesondere bis deutlich über 100°C, ist der Wärmespeicher mit Feststoffteilchen und Öl gefüllt.

## Beschreibung

Die Erfindung betrifft eine Wärme- und Stromerzeugungsanlage gemäß Oberbegriff des Anspruchs 1 und ein Verfahren zu deren zur Erzeugung von Wärme und Strom mittels dieser Anlage.

Bei der aus der DE-C2 27 47 734 bekannten Anlage ähnlich derjenigen der vorstehend bezeichneten Gattung treibt eine Brennkraftmaschine einen der Stromerzeugung dienenden Generator an, und werden die Abgase der Brennkraftmaschine durch einen Wärmetauscher geführt, wobei die dort an das heiße Kühlwasser der Brennkraftmaschine abgegebene Wärme mittels des Kühlwassers durch einen zweiten Wärmetauscher geführt wird, der andererseits vom Rücklauf eines Heizkreises durchströmt ist; dabei wird das heiße Kühlwasser der Brennkraftmaschine mittels der Abgaswärme derselben weiter erwärmt und so mit höherer Temperatur dem zweiten Wärmetauscher zugeführt, so daß dort ein größeres Wärmepotential zur Aufheizung des Rücklaufwassers des Heizkreises zur Verfügung steht. Mittels dieser Anlage kann jedoch nur dann Wärme an den Heizkreis abgegeben werden, wenn die Brennkraftmaschine in Betrieb steht.

Bei der aus der DE-C2 25 00 641 bekannten Anlage ebenfalls ähnlich der eingangs bezeichneten Gattung wiederum mit einer Brennkraftmaschine und einem von dieser angetriebenen Generator ist dieser Nachteil bereits dadurch überwunden, daß für das Abgas der Brennkraftmaschine, deren Kühlwasser, Schmieroel und Wärmestrahlung je ein Wärmetauscher und der aus diesen Wärmetauschern bestehenden Wärmetauscher-Einheit ein Wärmespeicher zugeordnet sind, wobei zwischen der Wärmetauscher-Einheit und dem Wärmespeicher eine Zusatzheizung angeordnet ist. Somit kann während des Stillstandes der Brennkraftmaschine Wärme aus dem Wärmespeicher bezogen werden. Zwar sind bei dieser Anlage die Brennkraftmaschine und der Generator in einem Schallschutzkapselraum untergebracht, dessen Wände von der Wärmetauscher-Eiheit, dem Wärmespeicher und Überwachungseinrichtungen gebildet sind. Dieser Schallschutzkapselraum bildet dabei zugleich einen Wärmeschutzraum, der an die Wärmetauscher-Einheit angeschlossen ist, so daß die gesamte von der Brennkraftmaschine erzeugte Wärme zwangsläufig zur weiteren Ausnutzung in dem Heizkreis zur Verfügung steht und einer hoher Wirkungsgrad erreicht ist. Über eine besondere Gestaltung der Wärmetauscher bzw. der aus diesem bestehenden Wärmetauscher-Einheit ist keine Aussage gemacht. Im übrigen ist die Elektroheizung zwischen dem Wärmespeicher und der Wärmetauscher-Einheit angeordnet, und zwar ohne Angabe über die Art der Einwirkung der Elektroheizung auf den Wärmespeicher bzw. den Wärmetauscher. Auch über die Art der Betriebsführung der bekannten Anlage ist keine Aussage gemacht, so daß davon auszugehen ist, daß die bekannte Anlage die zu verschiedenen Tageszeiten unterschiedlichen Kosten elektrischer Energie nicht berücksichtigt und damit die Kosten für die Bereitstellung von heißem Brauchwasser trotz des hohen Wirkungsgrades der Anlage noch unverhältnismäßig hoch sind.

Bei der aus der DE-A1 29 34 647 bekannten Anlage der eingangs bezeichneten Gattung ist der von den Wärmetauscherelementen und der Elektroheizung freigelassene Raum der Wärmetauscher/Wärmespeicher-Einheit mit Wasser gefüllt. Daher ist nur eine Wärmespeicherung unterhalb 100°C möglich, so daß die Wärmespeicherkapazität entsprechend beschränkt ist.

Aus der DE-B1 18 00 816 ist zwar bekannt, eine Wärmespeichereinheit mit Feststoffteilchen und zugleich mit Öl zu füllen. Das Öl dient dort aber lediglich dem Wärmetransport von einem außerhalb des Speichers gelegenen Wärmetauscher zum Inneren des Speichers und zur dortigen Abgabe an die Feststoffteilchen, also nicht zugleich der Wärmespeicherung.

Der Erfindung liegt daher die Aufgabe zugrunde, die eingangs hinsichtlich ihrer Gattung bezeichnete Anlage so auszubilden, daß sie bei grundsätzlich hoher Wirksamkeit des Wärmetauschers und des Wärmespeichers preiswert herstellbar ist und zugleich die Speicherung großer Wärmemengen zuläßt. Im übrigen liegt der Erfindung die Aufgabe zugrunde, ein Verfahren zum Betreiben der Anlage anzugeben, das eine preiswerte Erzeugung von heißem Brauchwasser ermöglicht.

In vorrichtungstechnischer Hinsicht wird die vorstehende Aufgabe durch die Maßnahmen des kennzeichnenden Teils des Anspruchs 1 gelöst. Vorteilhatte Weiterbildungen sind aus den Unteransprüchen 2 bis 15 zu ersehen.

In verfahrenstechnischer Hinsicht wird die vorstehende Aufgabe durch die Maßnahmen des kennzeichnenden Teils des Anspruchs 16 gelöst, wobei eine vorteilhatte Weiterbildung aus dem Unteranspruch 17 zu ersehen ist.

Die bekannte Ausbildung des Wärmetauschers und des Wärmespeichers als eine Einheit führt in Verbindung mit der Auffüllung mit einem stückigen Feststoff und einem flüssigen Medium mit besonderem Siedepunkt bei zugleich preiswerter Herstellbarkeit zu einem wesentlich verbesserten Speicherungsvermögen.

Die Herstellungskosten lassen sich im übrigen durch die ertindungsgemäße Maßnahme, und zwar sehr erheblich, reduzieren, daß die Wärmetauscher/Speicher-Einheit aus einem großvolumigen Hohlkörper insbesondere aus Beton, besteht der mit stückigem Feststoff hoher Wärmespeicherkapazität, insbesondere mit Kies, und flüssigem Medium hoher Wärmespeicherkapazität und mit einem Siedepunkt oberhalb 100°C, insbesondere mit Oel, gefüllt ist. Ein solcher Betonhohlkörper kann beispielsweise in einer bei ihrer Herstellung abgewandelten Fertiggarage bestehen; als Füllgut zu verwendender Feststoff steht praktisch überall sehr preiswert zur Verfügung, so daß lediglich die zwischen den einzelnen Feststoffteilen verbleibenden Hohlräume mittels des flüssigen Mediums, das volumetrisch gesehen wesentlich teurer als der stückige Feststoff ist, aufzufüllen sind. Als zu verwendender Feststoff kommen neben Kies beispielsweise Recycling-Glas, Urgestein etc. in Betracht, die im übrigen einen verhältnismäßig geringen Wärmeausdehnungskoeffizienten, darüber hinaus aber ein hohes Wärmespeichervermögen aufweisen. Damit ist die erfindungsgemäß ausgebildete Wärmetauscher/Wärmespeicher-Einheit ein Bauelement der Anlage, das in der Tat bei sehr geringen Herstellungskosten zugleich ein nahezu extrem großes Wärmespeichervermögen besitzt. Damit die Wärmetauscherelemente bzw. die Elektroheizung bei der einmaligen Einfüllung des stückigen Feststoffes in die Wärmetauscher/Wärmespeicher-Einheit nicht beschädigt werden, können diese Elemente beispielsweise durch perforierte Bleche mindestens oberseitig abgedeckt sein.

Alternativ kann eine Ausbildung des Hohlkörpers als Zweikammer-Körper vorgesehen werden. Diese Ausbildung bietet die Möglichkeit, die Wärmetauscherelemente und die Elektroheizung beispielsweise in der einen Kammer und damit getrennt vom stückigen Feststoff unterzubringen, wobei die genannte eine Kammer nur mit dem flüssigen Medium und die andere Kammer mit stückigem Feststoff und flüssigem Medium gefüllt ist. Die nur mit flüssigem Medium zu füllende Kammer kann eine verhältnismäßig kleinvolumige Kammer sein. Sie muß mit der anderen Kammer in Verbindung stehen. Diese Verbindung kann beispielsweise dadurch bewirkt sein, daß die zwischen den beiden Kammern vorgesehene Trennwand in einem Abstand von der Oberseite des Hohlkörpers endet.

In diesem Fall ist die dann mit stückigem Feststoff zu füllende Kammer nur bis höchstens zur Oberkante der Trennwand mit dem stückigen Feststoff zu füllen und sind im übrigen beide Kammern bis zur Oberseite des Hohlraumes mit dem flüssigen Medium zu füllen. Schon aufgrund der unterschiedlichen Wärmeverhältnisse in den beiden Kammern kommt es zu einer gewissen Zirkulation des flüssigen Mediums, die noch durch eine entsprechend einzusetzende Umwälzpumpe unterstützt werden kann. Bei dieser Zirkulation strömt das flüssige Medium von der u.a. mit stückigem Feststoff gefüllten Kammer in die nur mit flüssigem Medium gefüllte Kammer. Bei entsprechender Anordnung der Druckseite und der Saugseite der zugehörigen Umwälzpumpe kann gewährleistet werden, daß auf den stückigen Feststoff zurückgehende Schwebstoffe im flüssigen Medium beim Überlauf über die Oberkante der Trennwand in der ausschließlich mit flüssigem Medium gefüllten Kammer nach unten absinken und dort niedergeschlagen gesammelt werden. Der untere Bereich dieser Kammer bildet dabei praktisch eine Art Schwebstoffsammelsumpf.

Zur Ausschaltung jeglicher Gefährdung der Umwelt durch etwa auslaufendes flüssiges Medium, insbesondere durch auslaufendes Oel, bei irgendwie bedingter Leckage des Hohlkörpers empfiehlt sich die Vorsehung eines hierzu grundsätzlich bekannten Kunststoffsacks im Inneren des Hohlkörpers. Damit dieser Sack nicht punktuell durch den aufliegenden stückigen Feststoff in seiner Dichwirkung beeinträchtigt wird, sollten im Inneren des Kunststoffsackes zumindest in dessen Bodenbereich Auskleidungselemente vorgesehen werden. Hierfür kommen beispielsweise Kunststoff-Hartschaumplatten in Betracht.

Die Kosten für die Erzeugung von Wärme bzw. Strom hängen nicht nur von den Herstellungskosten der zugehörigen Anlage ab, sondern langfristig gesehen sogar noch stärker von den Kosten der zur Verfügung stehenden Ausgangsenergie.

Die Kosten des in einer Brennkraftmaschine einzusetzenden Brennstoffs bezogen auf die in diesem enthaltene Wärmeeinheit sind zwar von Haus aus unterschiedlich. Unter Berücksichtigung dieser Unterschiedlichkeit und der Unterschiedlichkeit der Kosten der jeweils zugehörigen Brennkraftmaschine läßt sich in diesem Bereich der Anlage bereits eine gewisse Optimierung erreichen. Darüber hinaus sind aber die unterschiedlichen Kosten für elektrische Energie zu unterschiedlichen Tageszeiten zu beachten; beispielsweise ist Nachtstrom wesentlich preis-werter als Strom zu anderen Tageszeiten. Im übrigen sind die Betreiber der öffentlichen Stromnetze während der Spitzenverbrauchszeiten für jeden ausgeschalteten Verbraucher dankbar bzw. sogar bereit, während dieser Zeiten von privaten Stromerzeugern Strom aufzunehmen und aufzukaufen. Für so aufgenommenen Strom werden in Abhängigkeit von der Tageszeit unterschiedliche Preise an den privaten Stromerzeuger bezahlt.

Bei richtiger Ausnutzung dieser Verhältnisse läßt sich mit der erfindungsgemäßen Anlage Wärme sehr preiswert erzeugen. Dabei ist zu beachten, daß der mittels der erfindungsgemäßen Anlage erzeugte Strom nicht deshalb erzeugt wird, weil Strom zu irgendwelchen Verbrauchszwecken erzeugt werden soll. Die Stromerzeugung ist eigentlich ein Nebenprodukt, das bei richtigem Einsatz bzw. zeitgerecht richtiger Erzeugung das eigentliche Ziel der erfindungsgemäßen Anlage, nämlich die Wärmeerzeugung, sehr preiswert möglich macht.

Die Erfindung sieht daher zur Lösung der oben angegebenen verfahrenstechnischen Aufgabe vor, den Wärmespeicher während der zur Verfügung stehenden Nachtstromlieferzeiten mittels der Elektroheizung unter Verwendung von Nachtstrom aufzuheizen und die Thermo/Elektro-Einheit, also beispielsweise eine Brennkraftmaschine, möglichst nur während der Spitzenverbrauchszeiten des öffentlichen Netzes zu betreiben. Dies bietet die Möglichkeit einer preiswerten Aufheizung des Wärmespeichers durch preiswerten Strom während der Nachtstromlieferzeiten bei zusätzlicher Nachheizung über die Wärme einer Solar-Einheit bzw. die Abwärme einer Brennkraftmaschine während der Spitzenverbrauchszeiten des öffentlichen Netzes, dann bei gleichzeitiger Zurverfügungstellung von Strom zur Abgabe an das öffentliche Netz zu verhältnismäßig hohen Preisen.

Eine weitere Optimierung der Wärmeerzeugungskosten ist dann erreichbar, wenn, da gegebenenfalls eine Nachheizung des Wärmespeichers außerhalb der Spitzenverbrauchszeiten des öffentlichen Netzes notwendig ist, der dann gleichzeitig erzeugte Strom, der zu diesen Zeiten nur zu einem verhältnismäßig schlechten Preis an das öffentliche Netz abgegeben werden kann, zur Erzeugung von Wasserstoff und/oder zum Aufladen von Akkus und/oder zum Aufheizen des Wärmespeichers mittels der Elektroheizung verwendet wird. Im letztgenannten Fall ist der Betrieb der Thermo/Elektro-Einheit außerhalb der Spitzenverbrauchszeiten des öffentlichen Netzes deutlich verkürzt. In den beiden zuvor genannten Fällen kann der Wasserstoff zu gegebener als Brennstoff für eine Brennkraftmaschine verwendet werden bzw. der in den Akkus gespeicherte Strom zum Betrieb der Elektroheizung verwendet werden.

Insgesamt ist durch die erfindungsgemäßen verfahrenstechnischen Maßnahmen eine Betriebsführung der erfindungsgemäßen Wärme- und Stromerzeugungsanlage erreichbar, die in der Tat eine sehr preiswerte Stromerzeugung zuläßt.

Die erfindungsgemäße Anlage und die zugehörige Betriebsweise lassen den Einsatz einer entsprechenden Anlage bereits in verhältnismäßig kleinen Baugrößen, beispielsweise für mehrere in ihrer Engergieversorgung zusammengefaßte Einfamilienhäuser oder industrielle Kleinanlagen in sehr rentabler Weise zu. Ausschließlich als Beispiel für einen gewerblichen Einsatz sei auf Autowaschanlagen verwiesen, die wegen ihres Betriebs ausschließlich tagsüber zur Erzeugung der notwendigen Wärme bei ausschließlicher Elektroheizung das öffentliche Netz sehr stark in Anspruch nehmen würden. Hier ist durch die erfindungsgemäße Anlage eine sehr starke Entlastung des öffentlichen Netzes durch Reduzierung des Strombezuges und durch Zulieferung von Strom, letzteres während der Spitzenverbrauchszeiten, erreichbar. Im wesentlichen gleiches gilt für den Fall des Einsatzes der erfindungsgemäßen Anlage zu Heizzwecken für Wohnhäuser, bei denen der hauptsächliche Wärmebedarf ebenfalls tagsüber auftritt. Selbstverständlich ist die erfindungsgemäße Anlage aber auch in Verbindung mit solchen Wärmeverbrauchern zweckmäßig einsetzbar, deren Wärmebedarf hauptsächlich oder etwa ausschließlich während der Nachtstunden auftritt. Ein Beispiel hierfür sind mit elektrischer Energie betriebene Backöfen von Bäckereien. Schließlich ist selbstverständlich ebenso möglich der Einsatz der erfindungsgemäßen Anlage in Verbindung mit mehreren Wärmeverbrauchern, bei deren einen tagsüber und deren anderen während der Nachtstunden der hauptsächliche Wärmebedarf auftritt.

Nachfolgend wird die Erfindung weiter ins Einzelne gehend unter Bezugnahme auf die Zeichnungen beschrieben, die ausschließlich beispielhaft zu verstehen sind; in den Zeichnungen zeigen:
- Fig. 1: ein schematisches Blockschaltbild einer erfindungsgemäßen Anlage und
- Fig. 2: einen vertikalen Schnitt durch die bei der erfindungsgemäßen Anlage vorgesehene Wärmetauscher/Wärmespeicher-Einheit.

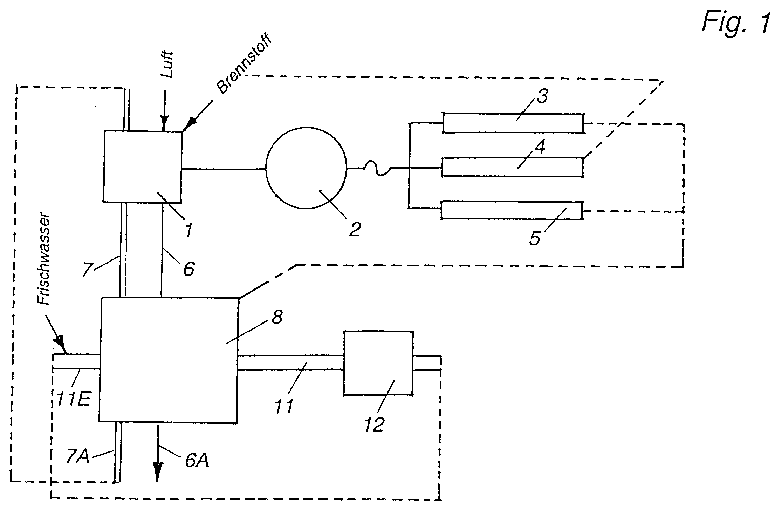

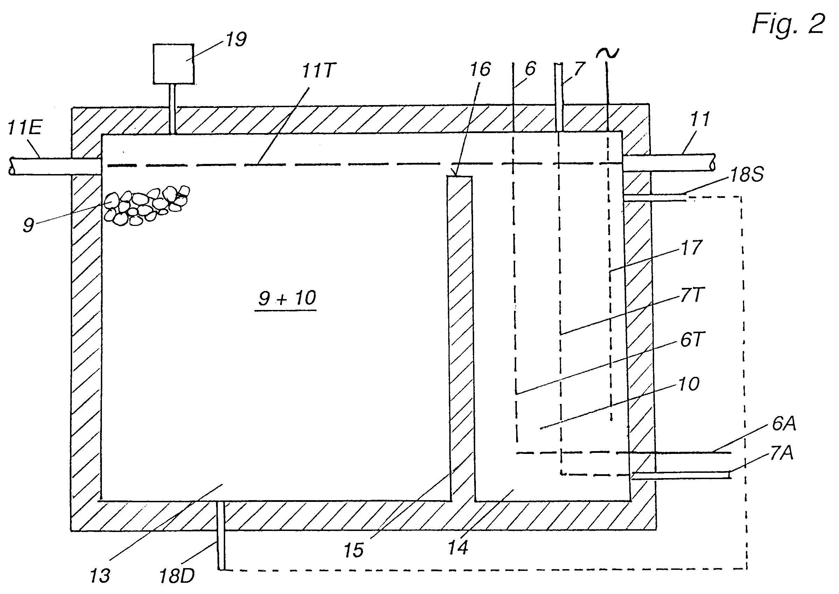

Gemäß Fig. 1 ist dient eine Brennkraftmaschine 1, beispielsweise ein herkömmlicher Verbrennungsmotor, dem Antrieb eines Elektrogenerators 2, der seinen Strom nach Wahl des Betreibers abgibt, und zwar beispielsweise in ein öffentliches Netz 3, an einen Wasserstofferzeuger 4 oder an eine Akkuladestation 5. Der im Wasserstofferzeuger 4 erzeugte Wasserstoff kann, wie dies in Fig. 1 angedeutet ist, dem Verbrennungsmotor 1 als Brennstoff zugeführt werden. Das Abgas des Verbrennungsmotors 1 sowie dessen aufgeheiztes Kühlwasser werden über entsprechende Leitungen 6 bzw. 7 einer Wärmetauscher/Wärmespeicher-Einheit 8 zugeführt und geben dort ihre Wärme an das Wärmespeichermedium ab, das gemäß Darstellung in Fig. 2 aus einerseits Kies 9 als besondere Form eine stückigen Feststoffes und andererseits Oel 10 als besondere Form eines flüssigen Mediums besteht.

Das aus der Wärmetauscher/Wärmespeicher-Einheit 8 austretende abgekühlte Abgas ist in der Hauptsache frei an die Umgebung abzuführen, selbstverständlich nach entsprechender Reinigung von Schadstoffen. Dieses Abgas kann aber auch, selbst wenn dies in der Zeichnung nicht dargestellt ist, zur Vorwärmung der der Brennkraftmaschine 1 zuzuführenden Verbrennungsluft herangezogen werden. Das aus der Wärmetauscher/Wärmespeicher-Einheit 8 austretende entsprechend gekühlte Kühlwasser der Brennkraftmaschine 1 ist gemäß schematischer Darstellung in Fig. 1 der Brennkraftmaschine wieder zuzuführen.

Andererseits steht die Wärmetauscher/Wärmespeicher-Einheit 8 mit einer Brauchwasserleitung 11 in Verbindung, die in der Einheit 8 aufgewärmtes Brauchwasser einem Verbraucher 12 zuführt. Dieser Verbraucher 12 kann ein solcher sein, der nach Ausnutzung der im Brauchwasser enthaltenen Wärme die Rückführung des Brauchwassers, wie dies schematisch in Fig. 1 angedeutet ist, zur Wärmetauscher/Wärmespeicher-Einheit 8 zuläßt; der Verbraucher 12 kann aber auch ein Verbraucher sein, der zugleich das Wasser verbraucht, so daß der Wärmetauscher/Wärmespeicher-Einheit 8 entsprechende Mengen Frischwasser zuzuführen sind, welche Möglichkeit ebenfalls in Fig. 1 schematisch dargestellt ist.

Selbstverständlich ist im übrigen eine vollständige wärmetechnische Kapselung der Brennkraftmaschine 1 und des Generators 2 möglich bei gleichzeitiger Abführung der dabei aufgenommenen Strahlungswärme der beiden genannten Maschinen, die zum Teil auch auf die in diesen Maschinen auftretende Reibungswärme zurückgeht. Die so aufgefangene Strahlungswärme kann durch geeignete Maßnahmen der Wärmetauscher/Wärmespeicher-Einheit 8 ebenfalls zugeführt werden, was eine noch weiter erhöhte Wärmerückgewinnung möglich macht und damit die Kosten der Wärmeerzeugung für Brauchwasser weiter reduziert.

Aus Fig. 2 ist der schematische Aufbau der Wärmetauscher/Wärmespeicher-Einheit 8 zu ersehen, und zwar in der Ausbildungsform als Betonhohlkörper mit zwei Kammern 13 bzw. 14, die durch eine Trennwand 15 voneinander getrennt sind. Die Trennwand 15 endet mit ihrer Oberseite 16 in einem Abstand von der Oberseite des Hohlraumes, so daß die beiden Kammern 13 und 14 dort miteinander in Verbindung stehen.

Fig. 2 läßt im übrigen die Leitungen 6 und 7 für die Zuführung des Abgases der Brennkraftmaschine 1 bzw. des heißen Kühlwassers derselben erkennen. Die zugehörigen Ausgänge sind mit 6A bzw. 7A gekennzeichnet. Ebenfalls schematisch erkennbar sind die zugehörigen Wärmetauscherelemente 6T bzw. 7T. Entsprechendes gilt für die Brauchwasserleitung 11, deren Einführungsteil mit 11 E und deren Wärmetauscherelement mit 11T bezeichnet sind.

Die im übrigen zur Aufheizung des Wärmespeichermediums, nämlich des Kies 9 und des Oels 10, dienende Elektroheizung ist mit 17 bezeichnet.

Die Saugseite 18S und die Druckseite 18D einer nicht dargestellten Umwälzpumpe für das Oel 9 sind einerseits am oberen Bereich der Kammer 14 bzw. am Bodenbereich der Kammer 13 angeordnet. Schließlich ist dem als Wärmetauscher/Wärmespeicher-Einheit 8 dienenden Betonhohlkörper oberseitig ein Ausdehnungsgefäß 19 zugeordnet.

Anstelle der Brennkraftmaschine 1 und des Generators 2 kann als Thermo/Elektro-Einheit selbstverständlich auch eine wärme- und stromerzeugende Solar-Einheit Verwendung finden.

Alternativ zu der dargestellten Ausführungsform kann der Wärmetauscher/Wärmespeicher-Einheit ein weiterer Wärmetauscher zugeordnet sein, nämlich für den Wärmeaustausch zwischen dem Wärmetransportmedium der Thermo/Elektro-Einheit bzw. der Brauchwasserleitung einerseits und dem flüssigen Speichermedium andererseits.

## Patentansprüche

1. Wärme- und Stromerzeugungsanlage, bestehend aus einer Thermo/Elektro-Einheit, insbesondere in der Form einer Brennkraftmaschine und einem von dieser angetriebenen Elektrogenerator, aus einem Wärmetauscher zwischen der Thermo/Elektro-Einheit einerseits und einer Brauchwasserleitung andererseits, ggf. zwischen der Abgasleitung der Brennkraftmaschine und/oder deren Kühlwasserumlaufsystem einerseits und der Brauchwasserleitung andererseits, aus einem Wärmespeicher in der Brauchwasserleitung und aus einer Elektroheizung zum Aufheizen des Wärmespeichers, wobei der Wärmetauscher und der Wärmespeicher als eine Einheit (8) ausgebildet sind und die Elektroheizung (17) innerhalb der Wärmetauscher/Wärmespeicher-Einheit (8) angeordnet ist, **dadurch gekennzeichnet,** daß der von den Wärmetauscherelementen (6T, 7T, 11T) und der Elektroheizung (17) freigelassene Raum der Wärmetauscher/Wärmespeicher-Einheit (8) mit stückigem Feststoff (9) hoher Wärmespeicherkapazität, insbesondere mit Kies, und flüssigem Medium (10) hoher Wärmespeicherkapazität und mit einem Siedepunkt oberhalb von 100⁰C, insbesondere mit Oel, gefüllt ist.

2. Anlage nach Anspruch 1, **dadurch gekennzeichnet,** daß die Wärmetauscherelemente (6T, 7T, 11T) und/oder die Elektroheizung (17) mindestens an ihrer Oberseite durch perforierte Bleche abgedeckt sind, deren Perforation kleiner als die kleinste Stückgröße des stückigen Feststoffes (9) ist.

3. Anlage nach Anspruch 1 oder 2, **dadurch gekennzeichnet,** daß der Wärmetauscher/Wärmespeicher-Einheit (8) eine Umwälzpumpe für das flüssige Medium (10) zugeordnet ist.

4. Anlage nach Anspruch 1, **dadurch gekennzeichnet,** daß die Wärmetauscher/Wärmespeicher-Einheit (8) aus einem großvolumigen Hohlkörper, insbesondere aus Beton, besteht.

5. Anlage nach Anspruch 4, **dadurch gekennzeichnet,** daß der Hohlkörper ein Zweikammer-Körper ist, dessen beide Kammern (13, 14) durch eine vom Hohlraumboden ausgehende Trennwand (15) voneinander getrennt sind, die oben mit Abstand zur Hohlraumdecke endet.

6. Anlage nach Anspruch 5, **dadurch gekennzeichnet,** daß die Wärmetauscherelemente (6T, 7T, 11T) und die Elektroheizung (17) in einer der beiden Kammern angeordnet sind und diese Kammer (14) ausschließlich mit flüssigem Medium (10) gefüllt ist, während die andere Kammer (13) mit stückigem Feststoff (9) und flüssigem Medium (10) gefüllt ist.

7. Anlage nach Anspruch 4, **dadurch gekennzeichnet,** daß im Inneren des Betonhohlkörpers (8) ein Auskleidungszwecken dienender Kunststoffsack vorgesehen ist.

8. Anlage nach Anspruch 7, **dadurch gekennzeichnet,** daß im Inneren des Kunststoffsackes zumindest in dessen Bodenbereich gegen punktuelle Überlastung schützende Auskleidungselemente vorgesehen sind.

9. Anlage nach Anspruch 1, **dadurch gekennzeichnet,** daß der Hohlraum an ein äußeres Ausdehungsgefäß (19) angeschlossen ist.

10. Anlage nach Anspruch 3 **dadurch gekennzeichnet,** daß die Saugseite (18S) der Umwälzpumpe am oberen Bereich des Hohlkörpers (8) und die Druckseite (18D) am unteren Bereich angeschlossen sind.

11. Anlage nach Anspruch 5 und 10, **dadurch gekennzeichnet,** daß die Saugseite (18S) der Umwälzpumpe am oberen Bereich der mit flüssigem Medium (10) gefüllten Kammer (14) des Hohlkörpers (8) und die Druckseite (18D) der Umwälzpumpe am unteren Bereich der mit stückigem Feststoff (9) und flüssigem Medium (10) gefüllten Kammer (13) des Hohlkörpers (8) angeschlossen sind.

12. Anspruch nach mindestens einem der vorhergehenden Ansprüche, **dadurch gekennzeichnet,** daß die Elektroheizung (17) und die Thermo/Elektro-Einheit so ausgelegt sind, daß die Summe der Wärmeerzeugung mittels der Elektroheizung (17) während der zur Verfügung stehenden Nachtstromlieferzeiten und der mittels des Wärmetauschers (8) rückgewinnbaren Wärmeerzeugung der Thermo/Elektro-Einheit (1) während der Spitzenverbrauchszeiten des öffentlichen Stromnetzes mindestens dem maximalen Brauchwärmebedarf während eines Tages entsprechen.

13. Anlage nach mindestens einem der vorhergehenden Ansprüche, **dadurch gekennzeichnet,** daß die Thermo/Elektro-Einheit in einer wärme- und stromerzeugenden Solareinheit besteht.

14. Anlage nach mindestens einem der vorhergehenden Ansprüche, **dadurch gekennzeichnet,** daß der Wärmetauscher der Wärmetauscher/Wärmespeicher-Einheit (8) ein Wärmetauscher für den unmittelbaren Wärmeaustausch zwischen dem Wärmetransportmedium der Thermo/Elektro-Einheit bzw. dem Medium der Brauchwasserleitung einerseits und dem Wärmespeichermedium (10) andererseits ist.

15. Anlage nach mindestens einem der vorhergehenden Ansprüche, **dadurch gekennzeichnet,** daß dem Wärmespeicher (8) ein Wärmetauscher für den Wärmetauscher für den Wärmeaustausch zwischen dem Wärmetransportmedium der Thermo/Elektro-Einheit bzw. dem Medium der Brauchwasserleitung einerseits und einem Zwischentransportmedium vorgeschaltet ist.

16. Verfahren zur Erzeugung von Wärme und Strom mittels der Anlage nach mindestens einem der vorhergehenden Ansprüche, **dadurch gekennzeichnet,** daß der Wärmespeicher während der Nachtstromlieferzeiten mittels der Elektroheizung unter Verwendung von Nachtstrom aufgeheizt wird und die Thermo/Elektro-Einheit während der Spitzenverbrauchszeiten des öffentlichen Stromnetzes betrieben wird.

17. Verfahren nach Anspruch 16, **dadurch gekennzeichnet,** daß bei Betrieb der Thermo/Elektro-Einheit außerhalb der Spitzenverbrauchszeiten des öffentlichen Stromnetzes mindestens ein Teil des erzeugten Stromes zur Erzeugung von Wasserstoff und/oder zum Laden von Akkus und/oder zum Aufheizen des Wärmespeichers mittels der Elektroheizung verwendet wird.
